Europäisches Patentamt

European Patent Office

Office européen des brevets

(19)

(11)    EP 0 810 132 B1

(12)    FASCICULE DE BREVET EUROPEEN

(45) Date de publication et mention
de la délivrance du brevet:
**06.12.2000   Bulletin 2000/49**

(51) Int Cl.⁷: **B60S 1/08**, G01S 15/04,
G01V 1/00

(21) Numéro de dépôt: **97108449.6**

(22) Date de dépôt: **26.05.1997**

(54) **Dispositif de détection ultrasonore destiné à la détection de corps étrangers présents à la surface d'une vitre**

Ultraschall-Detektvorrichtung zum Detektieren von fremden Gegenständen auf einer Glasoberfläche

Ultrasonic detection device for detecting foreign bodies on the surface of glass

(84) Etats contractants désignés:
**CH DE ES FR GB IT LI NL SE**

(30) Priorité: **30.05.1996  FR 9606669**

(43) Date de publication de la demande:
**03.12.1997   Bulletin 1997/49**

(73) Titulaire: **ASULAB S.A.**
**CH-2501 Bienne (CH)**

(72) Inventeurs:
• **Saurer, Eric**
**2022 Bevaix (CH)**

• **Jeanmonod, Roland**
**2000 Neuchâtel (CH)**

(74) Mandataire: **Ravenel, Thierry Gérard Louis et al**
**I C B,**
**Ingénieurs Conseils en Brevets SA,**
**7, rue des Sors**
**2074 Marin (CH)**

(56) Documents cités:
**EP-A- 0 638 822         EP-A- 0 641 696**

## Description

L'invention concerne un dispositif de détection ultrasonore destiné à la détection de corps étrangers, notamment humides, présents à la surface d'une vitre ou d'un pare-brise comprenant au moins une première plaque ayant une première épaisseur, le dispositif comprenant un transducteur coopérant avec une première face de ladite première plaque, ledit transducteur pouvant émettre un signal ultrasonore de fréquence $f_t$ et pouvant en outre recevoir un signal ultrasonore réfléchi sur une deuxième face de la première plaque, la variation du signal réfléchi étant représentative de la présence ou de l'absence de corps étrangers sur ladite deuxième face en regard dudit transducteur.

Un tel dispositif de détection est déjà décrit dans le document EP-A-0 512 653, dans une application à la commande automatique d'un dispositif d'essuie-glace destiné à l'élimination de corps étrangers tel que l'eau à la surface d'un pare-brise.

Par ailleurs, le document EP-A-0 641 696 propose une vitre comportant un tel dispositif ultrasonore pour la détection de corps étrangers présents sur une de ses faces. Dans ce document, il est précisé que pour obtenir une sensibilité optimale à la détection de corps étrangers présents à la surface d'une plaque de verre à laquelle est relié un transducteur, il est nécessaire que l'amplitude de la vibration de cette plaque de verre soit maximale. Or cette condition n'est réalisée que si la fréquence d'un des modes de résonance de la cavité résonnante que constitue la plaque de verre en question est sensiblement égale à la fréquence de l'onde ultrasonore émise par le transducteur. En d'autres termes, la fréquence du transducteur $f_t$ doit être sensiblement égale à la fréquence $f_K$ d'un des modes de résonance de la plaque, selon la relation $f_K = K.V/2e$, V étant la vitesse de l'onde dans le matériau constituant la plaque, e étant l'épaisseur de ladite plaque, K étant un entier non nul et $f_t$ étant la fréquence de résonance du transducteur libre de toute contrainte, c'est-à-dire notamment lorsqu'il n'est pas relié à la plaque.

On comprend donc qu'il est aisé de choisir un transducteur émettant une onde ultrasonore dont la fréquence est adaptée à l'épaisseur de la plaque de verre du pare-brise en contact avec l'environnement extérieur et en particulier la pluie lorsqu'on veut utiliser ce dispositif pour déclencher un dispositif d'essuie-glace comme cela est décrit dans le document EP-A-0 512 653.

La solution décrite dans le document EP-A-0 641 696 est satisfaisante mais la sensibilité du dispositif de détection peut être encore améliorée, notamment dans le cas de la présence d'une très faible quantité d'éléments à détecter.

Ainsi, la présente invention a pour but principal d'améliorer les solutions de l'art antérieur en fournissant un dispositif de détection ultrasonore de corps étrangers qui présente une sensibilité de détection encore meilleure.

A cet effet, l'invention a pour objet un dispositif de détection ultrasonore destiné à la détection de corps étrangers, notamment humides, présents à la surface d'une vitre comprenant au moins une première plaque ayant une première épaisseur, le dispositif comprenant un transducteur coopérant avec une première face de ladite première plaque, ledit transducteur pouvant émettre un signal ultrasonore de fréquence $f_t$ et pouvant en outre recevoir un signal ultrasonore réfléchi sur une deuxième face de la première plaque, la variation du signal réfléchi étant représentative de la présence ou de l'absence de corps étrangers sur ladite deuxième face en regard dudit transducteur (Dispositif du type divulgué dans EP-A-0 641 696), caractérisé en ce que la fréquence propre ($f_t$) du transducteur $f_t$ est choisie pour satisfaire la relation suivante:

$$f_K/100 \leq |f_t\text{-}f_K| \leq f_K/10$$

où $f_K = K.V/2e$ est la fréquence du Kième mode propre de la cavité résonante que constitue la première plaque de verre pour la résonance de l'onde ultrasonore émise par le transducteur, K étant un nombre entier non nul, V la vitesse de propagation de l'onde ultrasonore dans le matériau constitutif de la première plaque, et e l'épaisseur de la première plaque.

L'invention permet ainsi de choisir la fréquence de résonance du transducteur ultrasonore qui, lorsque le transducteur est assujetti à une plaque de verre jouant le rôle de cavité résonnante pour l'onde ultrasonore émise par ledit transducteur, soit telle que la sensibilité à une légère perturbation créée à la surface de ladite plaque de verre soit optimale.

Selon un mode de réalisation préféré de l'invention, la fréquence $f_t$ du transducteur est choisie pour satisfaire à la relation suivante :

$$f_K/100 \leq f_t\text{-}f_K \leq f_K/10,$$

$f_t$ étant supérieure à $f_K$.

D'autres caractéristiques et avantages de l'invention apparaîtront plus clairement à lecture de la description suivante d'un mode de réalisation de l'invention donné à titre purement illustratif et non limitatif, cette description étant faite en liaison avec les dessins dans lesquels :

- la figure 1 montre un schéma de principe d'un exemple de système de nettoyage d'un pare-brise à commande automatique utilisant un dispositif de détection selon l'invention;

- la figure 2 est une représentation schématique en coupe d'un mode de réalisation d'un dispositif de détection selon l'invention monté sur un pare-brise pour véhicule automobile;

- les figures 3a et 3b montrent respectivement la forme du signal ultrasonore après réflexion sur un pare-brise sec et humide, et

-    la figure 4 est une courbe de sensibilité de détection à la présence d'une goutte d'eau dont la surface en contact avec le pare-brise est précisément déterminée sur la surface du pare-brise, exprimée en unité arbitraire, en fonction de la différence de fréquence $f_t - f_K$.

La description de l'invention va être faite dans le cadre d'une application dans laquelle on procède à l'élimination de corps étrangers humides tel que la pluie, la neige, la boue etc.. présents à la surface d'un pare-brise pour véhicule automobile.

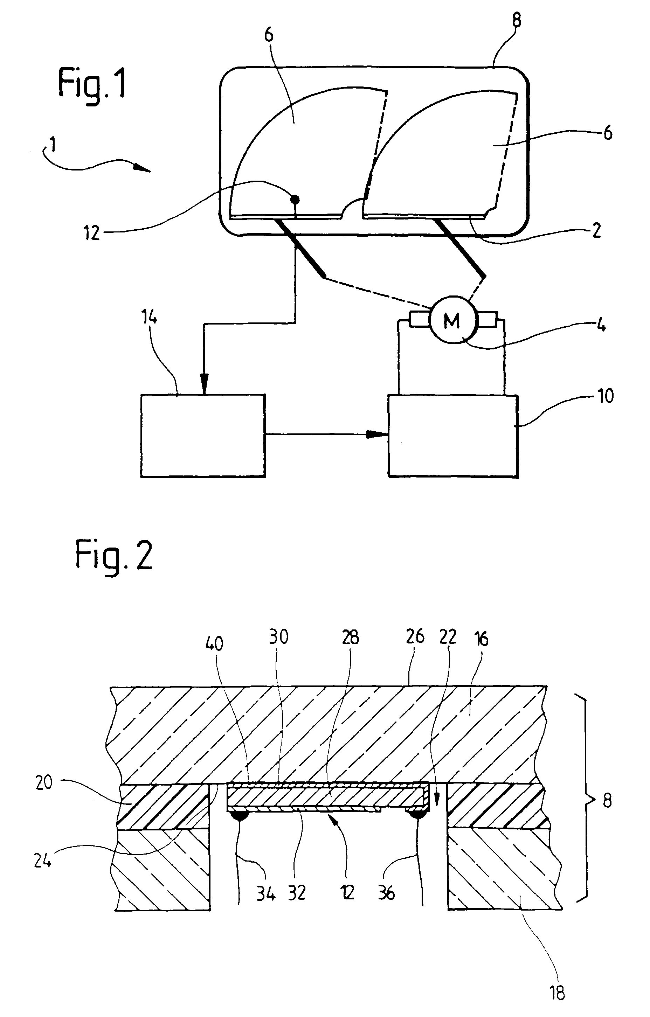

En se référant à la figure 1 on voit un système classique de nettoyage à commande automatique d'essuie-glace désigné par la référence générale 1. Le système 1 comprend des essuie-glace 2 couplés mécaniquement à un moteur 4. Lorsque les essuie-glace 2 sont actionnés, ils balayent respectivement des zones 6 en forme de secteur circulaire d'un pare-brise 8. Des moyens d'actionnement 10 connectés au moteur 4 permettent d'enclencher et/ou de déclencher le moteur.

La commande automatique des essuie-glace est réalisée à l'aide du dispositif de détection 12 selon l'invention placé en regard d'une des zones 6. Le dispositif de détection coopère avec un circuit de commande 14 susceptible de fournir un signal de commande approprié aux moyens d'actionnement 10 en réponse à un signal de détection provenant du dispositif de détection 12.

En se référant maintenant à la figure 2, on voit en coupe un mode de réalisation d'un pare-brise dans lequel est intégré le dispositif de détection 12 selon l'invention qui fournit un signal de détection représentatif de la présence de corps étrangers à la surface extérieure du pare-brise 8 et notamment de la présence de pluie à la surface de ce dernier.

Le pare-brise 8 comprend une première plaque 16 et une deuxième plaque 18 assemblées par une couche de liaison 20. Dans l'exemple décrit, les plaques 16 et 18 sont réalisées en verre et la couche de liaison 20 est réalisée en un polymère tel que le polyvinylebutadiène (PVB).

Le dispositif de détection 12 est disposé, grâce à un évidement 22 ménagé respectivement dans la plaque 18 et dans la couche de liaison 20, sur une face 24 de la plaque 16 opposée à une face extérieure 26 de cette même plaque. La face 26 est la face du pare-brise en contact avec les corps étrangers à détecter.

Le dispositif de détection 12 comprend un transducteur piézo-électrique 28 utilisé successivement en mode émission et en mode réception. Le transducteur 28 présente par exemple la forme d'une pastille munie d'électrodes d'excitation 30, 32 isolées l'une de l'autre et destinées à être reliées au circuit de commande 14 par des conducteurs 34, 36.

Le principe de fonctionnement du dispositif de détection 12 est le suivant.

Le circuit de commande 14 excite le transducteur piézo-électrique 28 au moyen d'une impulsion de tension courte engendrant ainsi un train d'ondes ultrasonores, le transducteur captant ensuite les échos multiples renvoyés successivement par les faces externe et interne de la plaque 16. L'amplitude de l'onde ultrasonore prisonnière de la plaque 16 décroît avec le temps en raison, d'une part, de l'énergie perdue vers l'extérieur de la plaque à chaque réflexion et, d'autre part, de la dissipation d'énergie dans la masse de la plaque.

Lorsque des gouttes de pluie se trouvent sur la surface 26 de la plaque 16, une énergie supplémentaire est perdue lors de la réflexion sur la surface 26, ce qui conduit à un amortissement plus rapide du train d'ondes ultrasonores réfléchies.

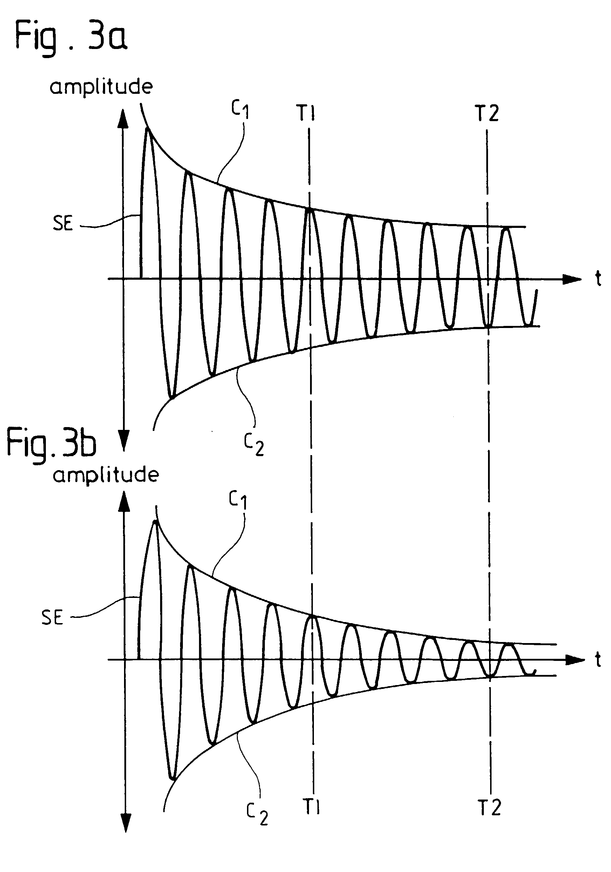

Cette situation est illustrée dans les figures 3a et 3b représentant respectivement l'amortissement du train d'ondes ultrasonores réfléchies lorsque la face 26 de la plaque 16 est sèche (3a) et respectivement mouillée (3b).

A titre indicatif, l'amplitude de l'impulsion électrique d'excitation est de l'ordre de 10 volts et sa durée d'environ 125 nanosecondes. Par ailleurs, le domaine temporel considéré du train d'ondes ultrasonores amorties utilisé pour déterminer la présence ou l'absence d'eau sur la surface 26, est de l'ordre de quelques dizaines de microsecondes compris typiquement entre 50 à 80 microsecondes.

Le circuit de commande 14 mesure l'intégrale S correspondant à la surface de l'enveloppe du signal d'écho SE représentée par les courbes C1 et C2 comprise à l'intérieur d'une fenêtre temporelle qui s'ouvre en T1 typiquement vingt microsecondes après l'impulsion d'excitation et qui se ferme en T2 comme cela vient d'être mentionné typiquement 30 microsecondes plus tard.

Cette intégrale prend une valeur donnée en l'absence de pluie et cette valeur diminue sensiblement en présence d'eau sur la surface 26, cette diminution étant en relation avec la quantité d'eau détectée par le transducteur 28.

Pour un bon fonctionnement du dispositif de détection, et comme cela a déjà été décrit dans la demande de brevet EP-A-0 641 696, la fréquence propre $f_t$ du transducteur 28 doit être choisie proche de l'une des fréquences propres de la cavité résonante que constitue la plaque 16. En d'autres termes, $f_t$ doit être sensiblement égale à $f_K = K . V/2e$, $f_t$ étant la fréquence de résonance du transducteur sans contrainte, c'est-à-dire non relié à la plaque 16, $f_K$ étant la fréquence du Kième mode propre de la cavité résonnante constituée par le plaque 16, V étant la vitesse de l'onde ultrasonore engendrée par le transducteur dans le matériau constitutif de la plaque 20, e étant l'épaisseur de ladite plaque 16 et K étant un nombre entier non nul.

La demanderesse a trouvé que la notion de $f_t$

sensiblement "égale" à $f_K$ doit en fait satisfaire la relation suivante :

$$f_K/100 \leq |f_t - f_K| \leq f_K/10, \qquad (1)$$

$f_t$ pouvant être plus grand ou plus petit que $f_K$.

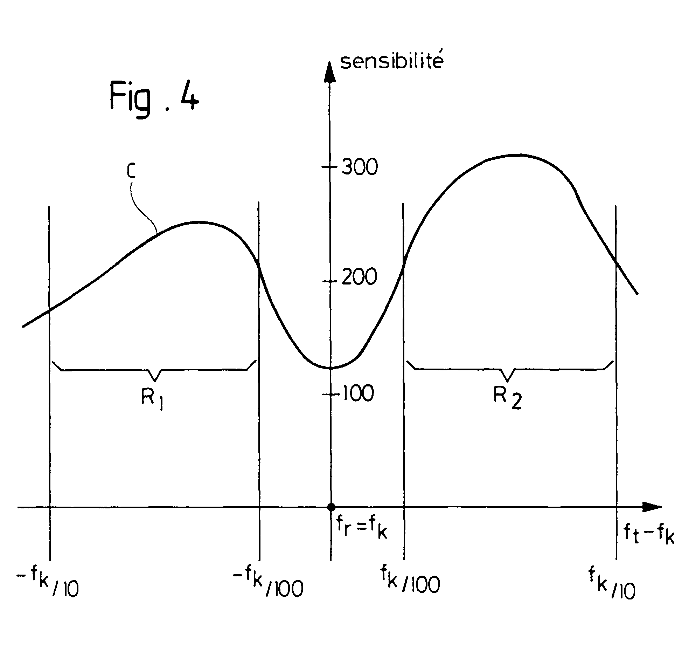

Cette première relation décrit donc deux domaines de fréquence ayant une largeur égale à $f_K/10$ - $f_K/100$, situés symétriquement de part et d'autre de la fréquence de résonance correspondant au Kième mode propre de vibration de la plaque d'épaisseur e. Ces deux domaines privilégiés sont représentés à la figure 4 qui montre une courbe C illustrant en unité arbitraire l'évolution de la sensibilité à la présence d'une goutte d'eau dont la surface en contact avec la face 26 du pare-brise en fonction de la différence de fréquence $f_t$ - $f_k$. Par sensibilité on entend la variation du signal $S = \int Env(t)\, dt$ correspondant à la variation de la surface de l'enveloppe du train d'ondes ultrasonores réfléchies comprise entre T1 et T2 (figures 3a, 3b) lorsque le parebrise est sec respectivement mouillé par une goutte d'eau dont la surface en contact avec la face 26 du pare-brise est exactement déterminée. On remarque que la courbe C comporte deux régions R1 et R2 marquées définissant les domaines de bonne sensibilité du dispositif de détection selon l'invention et selon la relation (1).

On a constaté par ailleurs que des résultats encore plus satisfaisants pouvaient être obtenus lorsque la fréquence $f_t$ du transducteur était choisie pour satisfaire la relation suivante :

$$f_K/100 \leq f_t - f_K \leq f_K/10 \qquad (2)$$

avec $f_t$ supérieure à $f_K$, ce qui correspond au domaine de gauche dans la figure 4.

A titre d'exemple, pour une plaque 16 ayant une épaisseur de $2,59 \times 10^{-3}$ m, une valeur V de 5880 $m.s^{-1}$ et une valeur choisie de K = 4, on obtient une valeur de $f_K$ = 4,527 Mhz. Ainsi la différence $|f_t - f_K|$ peut être comprise entre 0,045 et 0,45 Mhz selon la relation (1). On notera que de manière avantageuse on obtient des résultats particulièrement satisfaisants en choisissant pour les valeurs de K les entiers 3 ou 4.

A la figure 2, on a représenté un moyen préféré pour coupler le transducteur 28 à la face 24 de la plaque 16. Dans cet exemple, le transducteur 28 est fixé au moyen d'un film de colle 40 permettant la transmission des ondes ultrasonores du transducteur 28 à la plaque 16. On précisera toutefois à ce propos que le film de couplage présente une épaisseur très faible par rapport à la longueur d'onde λ du signal émis par le transducteur, afin d'éviter une trop grande absorption du signal ultrasonore. Typiquement, la demanderesse a constaté que l'utilisation d'un film de couplage ayant une épaisseur comprise entre 10 à 30 μm conduit à des résultats satisfaisants.

A titre d'exemple, les moyens de couplage peuvent comprendre une colle ou une huile silicone.

Afin de réaliser une transmission et une réception uniforme et efficace des signaux ultrasonores émis et reçus par le transducteur, on veillera à ce qu'aucune bulle d'air ne soit présente aux interfaces transmettant les signaux.

On notera également que dans le cas où le transducteur 28 est fixé sur une plaque formée d'un sandwich, par exemple comprenant plusieurs lames de verre, l'épaisseur e indiquée dans les relations mentionnées ci-dessus correspondra à l'épaisseur équivalente du sandwich et $f_K$ correspondra à la fréquence de résonance du sandwich ou à un multiple de cette fréquence. En d'autres termes, la première plaque mentionnée dans les revendications peut comprendre plusieurs lames de verre assemblées ayant une épaisseur équivalente.

## Revendications

1. Dispositif de détection (12) ultrasonore destiné à la détection de corps étrangers, notamment humides, présents à la surface (26) d'une vitre comprenant au moins une première plaque (16) ayant une première épaisseur, le dispositif comprenant un transducteur (28) coopérant avec une première face (24) de ladite première plaque (16) ledit transducteur (28) pouvant émettre un signal ultrasonore de fréquence ($f_t$) et pouvant en outre recevoir un signal ultrasonore réfléchi sur une deuxième face (26) de la première plaque (16), la variation dudit signal réfléchi étant représentative de la présence ou de l'absence de corps étrangers sur ladite deuxième face (26) en regard dudit transducteur (28), caractérisé en ce que la fréquence ft est choisie pour satisfaire la relation suivante :

$$f_K/100 \leq |f_t - f_K| \leq f_K/10$$

où fK = K.V/2e est la fréquence du Kième mode propre de la cavité résonante que constitue la première plaque de verre pour la résonance de l'onde ultrasonore émise par le transduceur, K étant un nombre entier non nul, V la vitesse de propagation de l'onde ultrasonore dans le matériau constitutif de la première plaque, et e l'épaisseur de la première plaque.

2. Dispositif de détection selon la revendication 1, caractérisé en ce que la frequence propre ($f_t$) est choisie pour satisfaire la relation suivante:

$$f_K/100 \leq f_t - f_K \leq f_K/10$$

$f_t$ étant supérieure à $f_K$.

3. Dispositif de détection selon la revendication 1 ou 2, caractérisé en ce que la valeur de K est égale à 3 ou 4.

**Patentansprüche**

1. Ultraschall-Erfassungsvorrichtung (12), die zur Erfassung insbesondere von nassen Fremdkörpern bestimmt ist, die auf der Oberfläche (26) einer Glasscheibe vorhanden sind, die wenigstens eine erste Platte (16) mit einer ersten Dicke umfaßt, wobei die Vorrichtung einen Meßwandler (28) umfaßt, der mit einer ersten Fläche (24) der ersten Platte (16) zusammenwirkt und ein Ultraschallsignal mit einer Frequenz ($f_t$) aussenden und außerdem ein Ultraschallsignal empfangen kann, das an einer zweiten Fläche (26) der ersten Platte (16) reflektiert wird, wobei die Änderung des reflektierten Signals das Vorhandensein oder Fehlen von Fremdkörpern auf der zweiten Fläche (26) gegenüber dem Meßwandler (28) angibt, dadurch gekennzeichnet, daß die Frequenz $f_t$ so gewählt ist, daß die folgende Beziehung erfüllt ist:

$$f_K/100 \leq |f_t - f_K| \leq f_K/10$$

wobei $f_K = K \cdot V/2e$ die Frequenz der K-ten Eigenschwingung des Resonanzhohlraums ist, den die erste Glasplatte für die Resonanz der vom Meßwandler ausgesendeten Ultraschallwelle bildet, wobei K eine von null verschiedene ganze Zahl ist, V die Ausbreitungsgeschwindigkeit der Ultraschallwelle in dem die erste Platte bildenden Material ist und e die Dicke der ersten Platte ist.

2. Erfassungsvorrichtung nach Anspruch 1, dadurch gekennzeichnet, daß die Eigenfrequenz ($f_t$) so gewählt ist, daß die folgende Beziehung erfüllt ist:

$$f_K/100 \leq f_t - f_K \leq f_K/10$$

wobei $f_t$ größer als $f_K$ ist.

3. Erfassungsvorrichtung nach Anspruch 1 oder 2, dadurch gekennzeichnet, daß der Wert von K gleich 3 oder 4 ist.

**Claims**

1. Ultrasonic detection device (12) intended to detect the presence of foreign bodies, in particular moist bodies, present on the surface (26) of a window comprising at least a first sheet (16) having a first thickness, the device comprising a transducer (28) co-operating with a first face (24) of said first sheet (16), said transducer (28) being able to emit, an ultrasonic signal of frequency ($f_t$) and able to receive a reflected ultrasonic signal on a second face (26) of the first sheet (16), the variation in said reflected signal being representative of the presence or absence of foreign bodies on said second face (26) facing said transducer (28), characterized in that the frequency $f_t$ is selected to satisfy the following equation:

$$f_K/100 \leq |f_t - f_K| \leq f_K/10$$

where $f_K = K.V/2e$ is the frequency of the Kth natural mode of the resonant cavity formed by the first sheet of glass for the resonance of the ultrasonic wave emitted by the transducer, K being a non zero integral number, V the speed of propagation of the ultrasonic wave in the material forming the first sheet and e the thickness of the first sheet.

2. Detection device according to claim 1, characterized in that the natural frequency (ft) is selected to satisfy the following equation:

$$f_K/100 \leq f_t - f_K \leq f_K/10$$

$f_t$ being greater than fK.

3. Detection device according to claim 1 or 2, characterized in that the value of K is equal to 3 or 4.

Fig.1

Fig.2

# Fig . 3a

# Fig.3b

Fig . 4

sensibilité

300

200

$R_1$

100

$R_2$

$f_r = f_k$

$f_t - f_k$

$-f_{k/10}$

$-f_{k/100}$

$f_{k/100}$

$f_{k/10}$

C